Europäisches Patentamt

European Patent Office

Office européen des brevets

(19)

(11) Veröffentlichungsnummer: **0 079 045**
**A1**

(12) **EUROPÄISCHE PATENTANMELDUNG**

(21) Anmeldenummer: **82110142.5**

(22) Anmeldetag: **04.11.82**

(51) Int. Cl.³: **G 02 F 1/133**
**G 09 F 9/35**

(30) Priorität: **06.11.81 DE 3144151**

(43) Veröffentlichungstag der Anmeldung:
**18.05.83 Patentblatt 83.20**

(84) Benannte Vertragsstaaten:
**DE FR GB**

(71) Anmelder: **ROBERT BOSCH GMBH**
**Postfach 50**
**D-7000 Stuttgart 1(DE)**

(72) Erfinder: **Knoll, Peter, Dr.**
**Neuwiesenrebenstrasse 42**
**D-7505 Ettlingen(DE)**

(72) Erfinder: **Pachner, Franz**
**Oberestrasse 49**
**D-7521 Ustadt(DE)**

(54) **LCD-Anzeigevorrichtung.**

(57) Es wird eine LCD-Anzeige vorgeschlagen, bei der der Flüssigkristall (7) rückseitig mit einer Keramikplatte (1) abgeschlossen wird. Die Keramikplatte (1) bildet einen weißen diffusen Reflektor, so daß dieser nicht zusätzlich auf Glasplatten aufgedampft werden muß. Auf der Keramikplatte (1) sind nach bekannten Verfahren Dickschichtschaltungen (5) und Leitungen (4) aufzubringen, die zur Weiterleitung und Verarbeitung von Ansteuersignalen der LCD dienen können.

EP 0 079 045 A1

R. 17445

30.10.1981 Fd/Jä

Robert Bosch GmbH, 7000 Stuttgart 1

LCD-Anzeigevorrichtung

Stand der Technik

Die Erfindung geht aus von einer LCD-Anzeigevorrichtung nach der Gattung des Hauptanspruchs. LCD-Anzeigevorrichtungen sind bereits allgemein bekannt. In der Funkschau, 2/1981, Seite 54, ist beispielsweise eine LCD-Anzeigevorrichtung mit dichroitischen Farbstoffanzeigen dargestellt. Diese bekannten LCD-Anzeigevorrichtungen weisen eine Frontglasscheibe auf, auf der, zum Flüssigkristall hin gewandt, eine leitfähige Elektrode angebracht ist. Auf der anderen Seite ist eine weitere Glasscheibe mit einer Elektrode angebracht, die den Flüssigkristall abschließt. Dieser Glasscheibe folgt zur Kontrasterhöhung ein weißer Reflektor, der auf die Glasscheibe aufgedampft oder anderweitig auf die Glasscheibe aufgebracht werden muß. Für das Aufbringen dieses Reflektors ist ein weiterer Arbeitsgang erforderlich. Das Aufbringen eines homogenen weißen, diffusen Reflektors ist zudem ein diffiziler Prozeß, der einen hohen Investitionsaufwand erfordert.

Vorteile der Erfindung

Die erfindungsgemäße LCD-Anzeigevorrichtung mit den kennzeichnenden Merkmalen des Hauptanspruchs hat demgegenüber

...

den Vorteil, daß die Keramikplatte bereits selbst als isolierender, weißer, diffuser Reflektor wirkt. Das Aufdampfen einer Reflektorschicht entfällt also. Weiterhin ist günstig, daß auf dem Keramiksubstrat Dickschichtelektroden sehr viel leichter aufbringbar sind als auf Glas.

Durch die in den Unteransprüchen aufgeführten Maßnahmen sind vorteilhafte Weiterbildungen und Verbesserungen der im Hauptanspruch angegebenen LCD-Anzeige möglich. Besonders vorteilhaft ist es, auf der Keramikplatte weitere elektrische Leitungen und/oder elektrische Bauelemente aufzubringen. Dadurch kann das Keramiksubstrat entweder auf der Vorder- und/oder auf der Rückseite als Träger bekannter Dickschichtschaltungen dienen, die zur Verarbeitung von Signalen und zur Ansteuerung der LCD dienen können. Weiterhin ist es günstig, die Keramikplatte dünn auszubilden. Bei der Benutzung sehr dünner Substrate ist auch eine Beleuchtung der LCD durch das Substrat hindurch möglich, so daß auch bei Dunkelheit eine gute Ablesung gegeben ist. Um besonders raumsparende LCD-Anzeigevorrichtungen mit elektrischen Bauelementen zu realisieren, ist es günstig, die elektrischen Bauelemente im Bereich des Flüssigkristalls auf der dem Flüssigkristall abgekehrten Seite des Substrats anzubringen.

Zeichnung

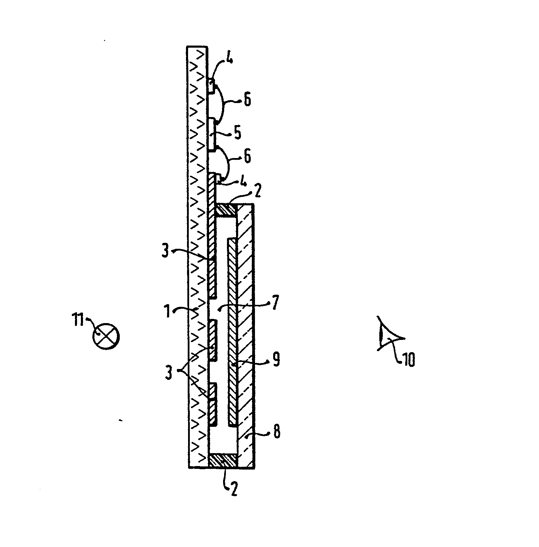

Ein Ausführungsbeispiel der Erfindung ist in der Zeichnung dargestellt und in der nachfolgenden Beschreibung näher erläutert.

...

Beschreibung des Ausführungsbeispiels

Die Figur zeigt eine Keramikplatte 1, auf der leitfähige
Elektroden 3 aufgebracht sind. Ein Flüssigkristall 7 befindet sich zwischen der Keramikplatte 1 und einem Frontglas 8. Abstandhalter 2 trennen die Keramikplatte 1 und
das Frontglas 8, so daß der Flüssigkristall 7 einbringbar ist. Auf dem Frontglas 8 sind ebenfalls leitfähige
Elektroden 9 aufgebracht. Diese Elektroden 9 müssen transparent sein, so daß die Anzeige ablesbar ist. Die leitfähigen Elektroden 3 auf der Keramikplatte 1 sind aus
dem Bereich des Flüssigkristalls 7 nach außen geführt.
Am Ende einer solchen Elektrode 3 befindet sich ein
bondfähiger Punkt 4, der beispielsweise aus Dickschichtpaste herstellbar ist. An diesem Bondpunkt 4 ist ein
Bonddraht 6 eines schematisch dargestellten integrierten
Schaltkreises 5 befestigt. Ein weiterer Bonddraht 6
führt zu einem weiteren Bondpunkt 4, der auf einer elektrischen Leiterbahn, die auf der Keramikplatte 1 aufgebracht ist, angeordnet ist. Als integrierter Schaltkreis 5 kann beispielsweise ein Ansteuer-IC für die LCD-
Anzeige vorgesehen sein. Ein Beobachter 10 kann nun über
das durchsichtige Frontglas 8 die LCD-Anzeige beobachten.
Rückwärtig ist eine Lichtquelle 11 angebracht.

Leiterbahnen und integrierte Schaltkreise können ebenfalls auf der der LCD abgewandten Seite des Keramiksubstrats aufgebracht sein. Dadurch ergibt sich eine
besonders raumsparende LCD-Anzeige mit einer Ansteuervorrichtung.

Ist die Keramikplatte 1 dünn, so ist es möglich, beispielsweise hinter der Keramikplatte eine Lampe anzu-

...

bringen, mit der die LCD-Anzeige beleuchtbar ist. Dadurch ist die LCD-Anzeige auch bei Dunkelheit gut ablesbar. Durch die Verwendung der Keramikplatte 1 ergibt sich eine besonders kontrastreiche LCD-Anzeige. Dies macht sich insbesondere bei sogenannten dichroitischen LCD-Anzeigen bemerkbar, da hier der Kontrast optimiert werden kann.

0079045

R. 17445
30.10.1981 Fd/Jä

Robert Bosch GmbH, 7000 Stuttgart 1

Ansprüche

1. LCD-Anzeigevorrichtung mit einem Flüssigkristall, mit leitfähigen Elektroden und mit einer Frontglasplatte, dadurch gekennzeichnet, daß als Rückseite eine Keramikplatte (1) Verwendung findet.

2. LCD-Anzeigevorrichtung nach Anspruch 1, dadurch gekennzeichnet, daß die Keramikplatte (1) elektrische Leitungen (4) und/oder elektrische Bauelemente (5) aufweist.

3. LCD-Anzeigevorrichtung nach Anspruch 1 oder 2, dadurch gekennzeichnet, daß die Keramikplatte (1) dünn ausgebildet ist.

4. LCD-Anzeigevorrichtung nach Anspruch 2 oder 3, dadurch gekennzeichnet, daß die elektrischen Bauelemente (5) auf der Rückseite des Keramiksubstrats (1) im Bereich des Flüssigkristalls (7) angebracht sind.

5. LCD-Anzeigevorrichtung nach Anspruch 3, dadurch gekennzeichnet, daß die LCD durch das Keramiksubstrat (1) hindurch mit einer punktförmigen oder flächenhaften Lichtquelle (11) beleuchtet wird.

## EINSCHLÄGIGE DOKUMENTE

EP 82110142.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - A1 - 2 813 007 (EBAUCHES)<br><br>* Ansprüche 1,2,6; Seite 7, Zeilen 2-22; Seite 12, Zeilen 1-12; Seite 13, Zeilen 7-21; Fig. 3,4,7,10,11 *<br><br>-- | 1-5 | G 02 F   1/133<br>G 09 F   9/35 |
| X | IEEE TRANSACTIONS ON ELECTRON DEVICES, Vol. ED-26, No. 8, August 1979<br><br>D.E. CASTLEBERRY "Varistor-Controlled Liquid-Crystal Displays" Seiten 1123-1128<br><br>* Seiten 1123-1125, Spalte 2, Zeile 32 *<br><br>-- | 1-5 | |
| A | US - A - 4 145 120 (KUBOTA)<br><br>-- | | RECHERCHIERTE SACHGEBIETE (Int. Cl. ³) |
| A,D | FUNKSCHAU, Nr. 2, 23. Jänner 1981, H. KINDL, H. KRÜGER "Weiterentwicklung - Stand und Zukunft der LCDs" Seiten 53-54<br><br>* Seite 54 *<br><br>---- | | G 02 F   1/00<br>G 09 F   9/00 |

X Der vorliegende Recherchenbericht wurde für alle Patentansprüche erstellt.

| Recherchenort | Abschlußdatum der Recherche | Prüfer |
|---|---|---|
| WIEN | 27-01-1983 | GRONAU |